# EUROPÄISCHE PATENTSCHRIFT

(11) **EP 1 895 816 B1**
(45) Veröffentlichungstag und Bekanntmachung des Hinweises auf die Patenterteilung: **21.03.2012**
(21) Anmeldenummer: 07010318.9
(22) Anmeldetag: 24.05.2007
(51) Int. Cl.: H05B 39/04, H02M 3/335

(54) **Elektrische Energieversorgungsschaltung für eine mehrkanalige Dimmervorrichtung**
Electric power supply circuit for a multi channel dimmer apparatus
Alimentation électrique pour un dispositif de gradateur de lumière multi-canal

(30) Priorität: 31.08.2006 DE 102006040977
(43) Veröffentlichungstag der Anmeldung: 05.03.2008
(73) Patentinhaber: Insta Elektro GmbH, 58509 Lüdenscheid (DE)
(72) Erfinder: Holtz, Friedhelm, 58511 Lüdenscheid (DE); Irmler, Wolfgang, 59494 Soest (DE); Krause, Karl-Heinz, 58809 Neuenrade (DE)

(56) Entgegenhaltungen:
- DE-A1- 19 632 129
- DE-A1- 19 737 786

## Beschreibung

Die vorliegende Erfindung geht von einer gemäß Oberbegriff des Hauptanspruches konzipierten Dimmeranordnung aus.

Derartige Dimmeranordnungen sind in der Regel dafür vorgesehen, über ihre Bedienstelle bzw. über ihre Bedienstellen eine zugeordnete Last bzw. mehrere zugeordnete Lasten einerseits Ein- und Auszuschalten, sowie andererseits den Dimmgrad für die zugeordnete Last bzw. zugeordneten Lasten wunschgerecht beeinflussen zu können. Dies kann z. B. durch eine Drehbetätigung, eine Tastbetätigung, eine kombinierte Betätigung usw. an der Bedienstelle bzw. den Bedienstellen geschehen. Eine Ansteuerung der Dimmeranordnung kann auch über ein Bussystem der Gebäudesystemtechnik erfolgen.

Bekannt sind Dimmeranordnungen in verschiedenen Ausführungen zum Dimmen im Phasenan- und Abschnitt für ohmsche, kapazitive und induktive Lasten. Bekannt sind weiterhin Universaldimmer, die sich auf eine kapazitive oder induktive Last automatisch einmessen. Eine Beschreibung findet sich beispielsweise im Elektronik-Handbuch der Fa. Albrecht Jung, Schalksmühle von 2003 auf den Seiten 13, 26, 27, 33 bis 35 und 42 bis 43. Dimmer werden z.B. in Unterputz-, Einbau- oder Reiheneinbauausführung für Hutschienenmontage (REG) ausgeführt. Neben Dimmern mit Vor-Ort-Bedienung gibt es Dimmer, die bestimmungsgemäß über ein Bussystem der Gebäudesystemtechnik angesteuert werden. Reiheneinbaugeräte mit mehreren Dimmerkanälen sind marktüblich.

Im Stand der Technik können sich Dimmer zum Beispiel über den Phasen-Anschnitt oder -Abschnitt der gedimmten Last mit Energie versorgen. Eine Beschreibung findet sich beispielsweise im Elektronik-Handbuch der Fa. Albrecht Jung, Schalksmühle von 2003 auf den Seiten 66 bis 67. Dies ist insbesondere bei Dimmern in Unterputz-Bauform vorteilhaft, wenn in der Unterputz-Dose kein Neutralleiter zur Verfügung steht. Durch die Versorgung des Dimmers im Restphasenan- oder Abschnitt kommt es jedoch zwangsweise zu einer Einschränkung z. B. der Maximalhelligkeit gegenüber einem Leuchtmittel, welches direkt mit Netzspannung versorgt wird. Weiterhin benötigt die sich aus dem Phasenan- oder Phasenabschnitt versorgende Energieversorgungsschaltung eine Mindestlast von etwa 50 W.

Weiterhin sind Dimmeranordnungen bekannt geworden, die nicht über eine vorgeschaltete Last versorgt werden. Bekannte Möglichkeiten für eine Energieversorgung sind in diesem Fall Kondensatornetzteile, Transformatornetzteile und Schaltnetzteile.

Bei solchermaßen fremdversorgten Dimmeranordnungen mit MOSFET oder IGBT - Leistungshalbleitern liegen diese entweder in einer aus vier Dioden gebildeten Brückengleichrichtung (Graetz-Brücke) oder bilden selber unter Verwendung der MOSFET-eigenen internen Inversdiode einen steuerbaren Brückengleichrichter. Eine Beschreibung findet sich beispielsweise im Elektronik-Handbuch der Fa. Albrecht Jung, Schalksmühle von 2003 auf den Seite 42. Die Leistungshalbleiter werden von einer Ansteuerschaltung gesteuert, die zumeist einen Mikrocontroller enthält. Bei MOSFET- oder IGBT-Dimmeranordnungen mit mehreren Dimmerkanälen muss die Energieversorgung der einzelnen Kanäle zumindest mit einer Funktionsisolierung galvanisch voneinander getrennt ausgeführt werden. Bei Dimmeranordnungen, die an unterschiedlichen Phasen des Versorgungsnetz betrieben werden können, sind bei der beispielsweise anzuwendenden Sicherheitsnorm IEC EN 60669 zwischen den einzelnen Kanälen Kriech- und Luftstrecken von 4 mm und eine Isolationsspannung von 2000 V einzuhalten.

Werden Dimmeranordnungen innerhalb eines Gebäudeinstallationssystem ferngesteuert, so sind weitere Kriech- und Luftstrecken einzuhalten. Das Bussystem KNX/EIB arbeitet z. B. mit Schutzkleinspannung (SELV) und verlangt Kriech- und Luftstrecken von 8 mm sowie Isolationsspannungen von 4000 V zu allen anderen Schaltungsteilen.

Die von den Energieversorgungsschaltungen der Dimmerkanälen aufgenommene Leistung belastet zusätzlich den netzseitigen Übertrager des Schaltnetzteils. Da die notwendige Leistungsaufnahme der Einzelkanäle aber nur ca. 40 mW beträgt, ist dies für die Dimensionierung des netzseitigen Übertragers des Schaltnetzteils keine relevante Einschränkung. Vielmehr ist die Größe der Wickelgüter von den jeweils einzuhaltenden Kriech- und Luftstrecken und Isolationsspannungen abhängig. Die aufgenommene Leistung der gesamten Stromversorgungsschaltung liegt bei unter einem Watt.

Bei Verwendung von Transformatoren für die Energieversorgung mit Netzfrequenz ergeben sich Transformatorenmaße, die der oft geforderten kompakten Ausführung nicht genügen. Für die Anwendung von Weitbereichsschaltnetzteilen sind diese Transformatoren zudem nur schlecht geeignet, da sie bei Betrieb an maximaler Eingangsspannung hohe Verluste produzieren und bezüglich der Leistung deshalb überdimensioniert werden müssen.

Durch die DE 196 32 129 A1 ist beispielsweise eine dem Oberbegriff des Hauptanspruches entsprechende Dimmeranordnung bekannt geworden. Diese Dimmeranordnung weist eine Energieversorgungsschaltung auf, über die die elektronischen Komponenten mit der zum Betrieb notwendigen elektrischen Energie versorgt werden. Die Energieversorgungsschaltung dieser Dimmeranordnung besteht aus einem selbsttaktenden Regelkreis nach dem Prinzip des Tiefsetzstellers. Dieser ist zwischen einem Schaltkreis zur Vorstabilisierung -beispielsweise einem Kondensatornetzteil- und der Steuerelektronik angeordnet. Dieser selbsttaktende Regelkreis ist jedoch nicht in der Lage, die benötigte potentialfreie Spannung zu liefern.

Zudem ist durch die DE 197 37 786 A1 eine mehrkanalige Dimmeranordnung bekannt geworden. Es ist eine Schaltungsanordnung zur Ansteuerung wenigstens einer Kaltkathodenfluoreszenzlampe vorgesehen, insbesondere zur Beleuchtung einer Anzeigeeinrichtung in Kraftfahrzeugen, wobei eine als Versorgungsspannung zur Verfügung stehende Gleichspannung in eine Wechselspannung gewandelt und in eine Betriebsspannung der wenigstens einen Kaltkathodenfluoreszenzlampe hochtransformiert wird. Anhand von Triacs kann individuell die Primärseite der Hochspannungstransformationen ausgetastet werden und damit eine individuelle Dimmung und Typenanpassung jeder einzelnen Röhre durchgeführt werden. Die Dimmung über Austastung hat gegenüber der Amplitudenvariation den Vorteil, dass die CCFL in einem festen Arbeitspunkt arbeitet.

Ausgehend von derartig ausgebildeten Dimmeranordnungen liegt der vorliegenden Erfindung die Aufgabe zugrunde, eine Dimmeranordnung mit MOSFET- oder IGBT-Leistungsschaltern und mehr als einer potenzialgetrennten Betriebsspannung zu schaffen, die bei möglichst kleinem Restphasenwinkel und sehr kleiner Mindestlast besonders betriebssicher funktioniert und sich bei kompaktem Aufbau auf besonders kostengünstige Art und Weise herstellen lässt.

Erfindungsgemäß wird diese Aufgabe durch die im Hauptanspruch angegebenen Merkmale gelöst. Vorteilhafte Weiterbildungen sind in den Unteransprüchen definiert.

Bei einer solchen Ausbildung ist besonders vorteilhaft, dass auf einfache Art und Weise ein Weitbereichs-Spannungseingang Verwendung finden kann.

Weitere vorteilhafte Ausgestaltungen des erfindungsgemäßen Gegenstandes sind in den Unteransprüchen angegeben. Anhand eines Ausführungsbeispiels sei die Erfindung im Prinzip näher erläutert, dabei zeigt:
- Fig. 1:: prinziphaft ein Blockschaltbild einer solchen Dimmeranordnung;
- Fig. 2:: prinziphaft ein nähere Einzelheiten darstellendes Schaltbild einer solchen Dimmeranordnung.

Wie aus den Figuren hervorgeht, besteht eine solche Dimmeranordnung im Wesentlichen aus einer Energieversorgungsschaltung die als Schaltnetzteil 1 ausgeführt ist, welches ein Rückkopplungsglied 2 zur Spannungsstabilisierung der Versorgung über eine Gleichrichtungs- und Siebungsschaltung 3 aufweist. Der erste Übertrager 4 des Schaltnetzteils 1 steht direkt mit mehreren weiteren Übertragern 5 in Verbindung, die ausgangsseitig jeweils zur Steuerung eines Dimmkanals 6, 7, 8, 9 vorgesehen sind.

Zur Erfüllung der Bedingung nach maximaler Helligkeit und minimaler Mindestlast muss die Steuerschaltung des Dimmers fremdversorgt werden.

Mit der Energie aus der Gleichrichtungs- und Siebungsschaltung 3 kann je nach Anwendungsfall ein Bussystem und/oder eine Bedieneinheit versorgt werden.

Wie des weiteren aus den Figuren hervorgeht, ist zur Versorgung von vier Dimmkanälen ein Schaltnetzteil 1 vorgesehen. Die geforderten Kriech- und Luftstrecken sowie Isolationsspannungen sind einzuhalten.

Die Stromversorgung der angeschlossenen Dimmelektronik 10 ist im einzelnen wie folgt ausgeführt:
Das Schaltnetzteil 1 wird primär mit Netzspannung versorgt und erzeugt sekundärseitig eine geregelte Spannung mit der höchsten Anforderung an die Kriech- und Luftstrecken und Isolationsspannung, wozu in der Regel eine Sekundärwicklung genügt. Die Topologie des Schaltnetzteils 1, des Rückkopplungsgliedes 2, der Gleichrichtungs- und Siebungsschaltung 3 und des ersten Übertragers 4 ist als Sperrwandler aufgebaut. Der erste Übertrager 4 hat einen für den Einsatz in Sperrwandler optimierten Kern- und Wicklungsaufbau. Erreicht wird dies in der Regel durch einen Luftspalt des Kerns. Die Primärwicklung wird aus einfach oder falls notwendig doppelt isoliertem Kupferlackdraht aufgebracht, die Sekundärwicklung darüber aus dreifach isoliertem Wickeldraht (TEX-E-Draht). Der aus der Topologie des Schaltnetzteils 1, des Rückkopplungsgliedes 2, der Gleichrichtungs- und Siebungsschaltung 3 und des ersten Übertragers 4 bestehende Sperrwandler ist mit einer Spannungsregelung ausgestattet, bei der die Höhe der Sekundärspannung gemessen, mittels Optokoppler auf die Primärseite übertragen und dort zur Steuerung des Stromflusses durch die Primärwicklung herangezogen wird.

Die Sekundärspannung des Sperrwandlers wird vor der Gleichrichtungs- und Siebungsschaltung 3 abgegriffen und auf zwei weitere Übertrager 5 geleitet. Diese haben mehrere Ausgangswicklungen, aus denen z. B. mit einer einfachen Einweggleichrichtung weitere Spannungen gewonnen werden, wobei die beiden weiteren Übertrager 5 Betriebsspannungen mit den erforderlichen Kriech- sowie Luftstrecken und Isolationsspannungen zu anderen Schaltungsteilen erzeugen. Diese beiden weiteren Übertrager 5 sind bezüglich Streuinduktivität, Kern- und Wicklungsaufbau so optimiert, dass sich bei Kurzschluss einer Sekundärwicklung nur begrenzte Rückwirkungen auf die Primärseite ergeben. Man erreicht dies durch Kerne ohne Luftspalt und Mehrkammer-Aufteilung der Wicklungen. Während der Übertragung liegt die geregelte Spannung des Sperrwandlers an den primären Windungen der beiden weiteren Übertrager 5 an, so dass eine hinreichende Regelung der weiteren Spannungen ohne zusätzliche Aufwand gegeben ist.

Die Versorgungsspannung der vier Dimmkanäle 6,7,8,9 kann mit Hilfe der gewählten Wicklungsverhältnisse individuell gewählt werden und somit bei Bedarf auch größer als die Ausgangsspannung des netzseitigen ersten Übertragers 4 sein.

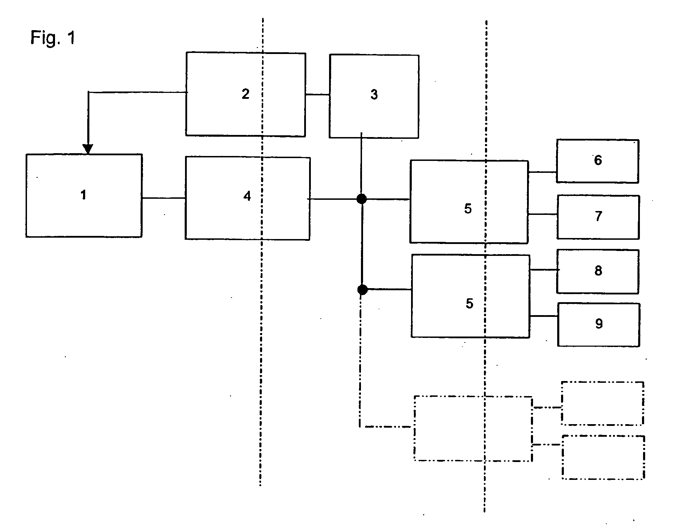

Selbstverständlich können, wie insbesondere aus Figur 1 hervorgeht bzw. angedeutet ist, auch ein oder mehr als zwei weitere Übertrager 5 angebunden sein.

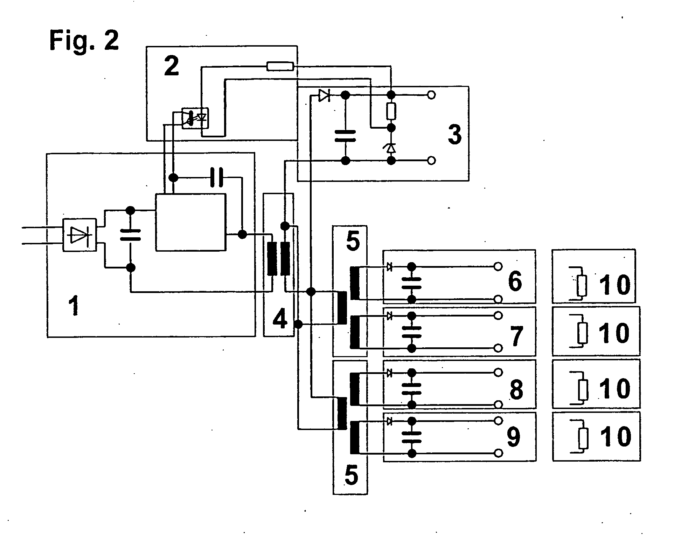

Wie bereits beschrieben, und insbesondere aus Figur 2 hervorgeht, findet eine Schaltungsanordnung mit vier Dimmkanälen 6, 7, 8, 9 Verwendung, dabei ist bei Konnex/EIB TPO die Busleitung eine zweidrahtigen Leitung auf SELV-Potenzial. Die sogenannte Buslast, d.h. die Energie, die der Zweidraht-Bus zur Verfügung stellt, wird nicht zur Eigenversorgung der busseitigen Schaltungsanordnung verwendet. Ein Handbetrieb ist möglich, also eine manuelle Betätigung der Dimmkanäle 6, 7, 8, 9 ohne anliegenden Bus und mithin ohne anliegende Busspannung.

Die Topologie des Schaltnetzteils 1, des Rückkopplungsgliedes 2, der Gleichrichtungs- und Siebungsschaltung 3 und des ersten Übertragers 4 ist als Sperrwandler ausgelegt. Der erste Übertrager 4 hat eine Ausgangsspannung, die nach der Gleichrichtungs- und Siebungsschaltung 3 zur Verwendung für die busseitige Schaltungsanordnung geeignet ist und Kriech- und Luftstrecken von 8 mm sowie eine Isolationsspannung von 4000 V zum Versorgungsnetz aufweist.

Die Sekundärseite des ersten Übertragers 4 führt unmittelbar zu den Primärseiten zweier weiterer Übertrager 5. Der erste dieser beiden Übertrager 5 stellt ausgangsseitig mit einer ersten Sekundärwicklung die Versorgung des ersten Dimmerkanals 6 zur Verfügung und mit einer zweiten Sekundärwicklung die Versorgung des zweiten Dimmerkanals 7. Die Sekundärkanäle halten Isolationsspannungen von mindestens 4 KV untereinander und zur primären Wicklung ein. Der zweite dieser beiden Übertrager 5 stellt ausgangsseitig mit einer ersten Sekundärwicklung die Versorgung des dritten Dimmerkanals 8 zur Verfügung und mit einer zweiten Sekundärwicklung die Versorgung des vierten Dimmerkanals 9. Die Sekundärkanäle halten Isolationsspannungen von mindestens 4 KV untereinander und zur primären Wicklung ein. Die normgemäßen Anforderungen an die Kriech- und Luftstecken sowie an die Isolationsspannungen werden innerhalb des ersten Übertragers 4 durch dessen Aufbau und bei den beiden weiteren Übertragern 5 durch deren Aufbau und deren Verguss erzeugt.

## Patentansprüche

1. Dimmeranordnung zur Helligkeitssteuerung von Beleuchtungseinrichtungen durch eine Phasenan- oder Phasenabschnittsteuerung, deren elektronische Komponenten über eine Energieversorgungsschaltung mit der zum Betrieb notwendigen Energie versorgt werden, **dadurch gekennzeichnet, dass** die Energieversorgungsschaltung als Schaltnetzteil (1) ausgeführt ist, welches ein Rückkopplungsglied (2) zur Spannungsstabilisierung der Versorgung über eine Gleichrichtungs- und Siebungsschaltung (3) aufweist, und dass der erste Übertrager (4) des Schaltnetzteils (1) direkt mit zumindest einem weiteren Übertrager (5) verbunden ist, der ausgangsseitig zur Versorgung zumindest eines Dimmkanals (6, 7, 8, 9) vorgesehen ist.

2. Dimmeranordnung nach Anspruch 1, **dadurch gekennzeichnet, dass** die Dimmeranordnung zumindest zwei Dimmkanäle (6, 7, 8, 9) aufweist.

3. Dimmeranordnung nach einem der Ansprüche 1 oder 2, **dadurch gekennzeichnet,** das Schaltnetzteil (1) als Weitbereichsschaltnetzteil ausgeführt ist.

## Claims

1. Dimmer arrangement for controlling the brightness of illuminating devices by means of a leading-edge or trailing-edge phase control whose electronic components are supplied with the power needed to operate by way of a power supply circuit, **characterised in that** the power supply circuit is executed as a switched-mode power supply (1) having a feedback element (2) for the purpose of stabilising the voltage of the supply by way of a rectifier and filtering circuit (3), and that the first transformer (4) of the switched-mode power supply (1) is directly connected to at least one further transformer (5) which is provided on the output side for the purpose of supplying at least one dimming channel (6, 7, 8, 9).

2. Dimmer arrangement according to Claim 1, **characterised in that** the dimmer arrangement has at least two dimming channels (6, 7, 8, 9).

3. Dimmer arrangement according to Claim 1 or Claim 2, **characterised in that** the switched-mode power supply (1) is executed as a wide-range switched-mode power supply.

## Revendications

1. Disposition de variateur de lumière pour la commande de l'intensité de lumière d'appareils d'éclairage par une commande de coupe de phase ou de section de phase dont les composants sont alimentés en énergie nécessaire au fonctionnement via un branchement d'alimentation en énergie, **caractérisée en ce que** le branchement d'alimentation en énergie est exécuté comme un bloc d'alimentation électrique (1) qui présente un organe de rétroaction (2) pour la stabilisation de tension de l'alimentation via un branchement de redressement et un branchement de filtrage (3) et **en ce que** le premier transmetteur (4) du bloc d'alimentation électrique (1) est directement relié avec au moins un autre transmetteur (5) qui est prévu côté sortie pour l'alimentation d'au moins un canal de variateur de lumière (6, 7, 8, 9).

2. Disposition de variateur de lumière selon revendication 1 **caractérisée en ce que** la disposition de variateur de lumière présente au moins deux canaux de variateur de lumière (6, 7, 8, 9).

3. Disposition de variateur de lumière selon l'une des revendications 1 ou 2 **caractérisée en ce que** le bloc d'alimentation électrique (1) est exécuté comme un bloc d'alimentation à longue portée.
